# EUROPÄISCHE PATENTSCHRIFT

(11) **EP 2 483 724 B1**
(45) Veröffentlichungstag und Bekanntmachung des Hinweises auf die Patenterteilung: **16.11.2016**
(21) Anmeldenummer: 10760310.2
(22) Anmeldetag: 24.09.2010
(51) Int. Cl.: G02B 6/42, G02B 6/138, G02B 6/30

(54) **LEITERPLATTE FÜR OPTISCHE UND/ODER ELEKTRONISCHE BAUTEILE**
PRINTED CIRCUIT BOARD FOR OPTICAL AND/OR ELECTRONIC DEVICES
CARTE DE CIRCUIT IMPRIMÉ POUR COMPOSANTS OPTIQUES ET/OU ÉLECTRONIQUES

(30) Priorität: 30.09.2009 DE 102009047800
(43) Veröffentlichungstag der Anmeldung: 08.08.2012
(73) Patentinhaber: Siemens Aktiengesellschaft, 80333 München (DE)
(72) Erfinder: BIERHOFF, Thomas, 33106 Paderborn (DE)
(86) Internationale Anmeldenummer: PCT/EP2010/064125
(87) Internationale Veröffentlichungsnummer: WO 2011/039110

(56) Entgegenhaltungen:
- WO-A1-2007/076888
- WO-A2-2004/015474
- DE-A1- 19 711 121
- US-A1- 2004 033 016
- US-A1- 2005 176 161
- US-A1- 2007 297 713
- US-A1- 2008 260 326

## Beschreibung

Die Erfindung betrifft eine Leiterplatte für optische und/oder elektronische Bauteile.

Aus Elektronik Praxis "Steckverbinder - Flaschenhals Steckverbinder", 18.10.2006, Redakteur: Kristin Rinorter, sind Steckverbinder bekannt, mit denen optische Fasern miteinander verbunden werden können.

Optische Fasersteckverbinder auf Basis der MTP/MPO Technologie (Multiple-Fiber Pushpull Optical) werden heutzutage verwendet, um Faserbündel von 4, 8, 12 und 24 Fasern (SI-MMF (mulit mode faser) 0 = 50 µm) verlustarm (0,3 dB Koppelverlust) miteinander zu verbinden. Hierbei werden die Fasern parallel mit einem Mittenabstand von 0.25 mm durch ein Hülsensystem (Ferrulle) innerhalb des Fasersteckers geführt. Durch Stoßkopplung von zwei Fasersteckverbindern (Male/Female) wird eine Kopplung der einzelnen Fasern erreicht. Die passive Grobausrichtung wird durch einen mechanischen Adapter und eine passive Feinausrichtung mit Hilfe von zwei MT-Stiften erzielt.

Aus US2006/0245694 sind MTP/MPO-Fasersteckverbinder bekannt, die eine in den Steckverbinder integrierte Mikrolinsenzeile enthalten. Diese Mikrolinsen dienen der Kollimation des divergenten, aus der Faser austretenden Lichtstrahls.

Ein weiteres Applikationsfeld dieser Steckverbinder stellt die Kopplung von Faserbünden an elektrooptische Wandlermodule dar, durch die eine verlustarme Kopplung zwischen Faserbündeln und aktivem Sende- bzw. Empfangsmodul erreicht wird.

Hybride Leiterplatten mit eingebetteten optischen Lagen sind Gegenstand der Forschung und Vorentwicklung. Dabei werden zumeist polymere Lagen mit eingebetteten lichtleitenden Kernstrukturen mit Querschnitten von ca. 50X50 µm² in einen Leiterplattenverbund laminiert. Ergänzt werden können diese optischen Lagen durch in die Lage eingebettete Spiegelmodule, die für jede integrierte Kernstruktur ein Spiegelelement aufweisen. Da diese während des Herstellungsprozesses der optischen Lage in selbige eingebracht werden, kann eine hochgenaue Ausrichtung des Spiegelmoduls erzielt werden. Durch eine Leiterplattenfreistellung im Bereich der Spiegelmodule kann das Lichtsignal senkrecht in die Leiterplatte auf ein Spiegelelement eingestrahlt werden und von diesem 90-Grad auf den Kernquerschnitt des Wellenleiters umgelenkt werden. Zudem kann das Spiegelelement auch strahlformende Abbildungsfunktionen (Fokussierung, Kollimation) übernehmen, wie beispielsweise aus EP1715368B1 bekannt ist.

Aus dem Dokument WO 2004/015474 A2 ist eine optische Verbindungsanordnung gemäß dem Oberbegriff des Patentanspruchs 1 bekannt.

Aus dem Dokument WO 2007/076888 A1 ist ein Gegenstand gezeigt, für den Entsprechendes wie für den aus dem oben erwähnten Dokument WO 2004/015474 A2 gezeigten Gegenstand gilt.

Aus dem Dokument US 2008/0260326 A1 ist ein Gegenstand für die Kopplung eines optischen Steckers mit einer Leiterplatte mit optischen Leitern bekannt unter Verwendung eines aufwändigen Moduls, das den optischen Stecker mittels umlaufender Wände zentriert und hält.

Aus dem Dokument US 2007/0297713 A1 ist eine optische Verbindungsmöglichkeit zwischen Chips und nicht zwischen einem Fasersteckverbinder und einer Leiterplatte mit optischen Leitern gezeigt.

Aus dem Dokument US 2004/0033016 A1 ist zwar eine Kopplungsmöglichkeit für eine Kopplung von Licht zwischen einer planen optischen Komponente und einer Optikanordnung gezeigt. Spiegelvorrichtungselemente und ein Modul zur optischen Kopplung der Fasern eines an das Modul ankoppelbaren Fasersteckverbinders sind aber unabhängig voneinander produziert, auch wenn sie in der Anwendung funktionell miteinander zusammenwirken.

Aus dem Dokumente US 2005/0176161 A1 ist des Weiteren ein Gegenstand gezeigt, der sich mit der Herstellung von Leiterplatten mit optischen Leitern befasst.

Aus dem Dokument DE 197 11 121 A1 ist allgemein eine verzweigende Lichtwellenleiteranordnung bekannt.

Aufgabe der Erfindung ist es, in einfacher Weise eine verlustarme, passiv ausgerichtete, steckbare Faserkopplung zwischen Fasern eines Fasersteckverbinders und in einer Leiterplatte eingebetteten Wellenleitern zu erzielen mit der Maßgabe, dass auch mehrere Spiegelebenen damit bedient werden können.

Die Aufgabe der Erfindung wird gelöst durch die Merkmale des unabhängigen Patentanspruchs 1.

Vorteilhafte Weiterbildungen der Erfindung sind in den abhängigen Patentansprüchen dargestellt.

Auf eine Leiterplatte sind auf ihrem unteren Leiterplattenmaterial mehrere optische Wellenleiter aufgebracht. Die Wellenleiter weisen jeweils eine Kernschicht auf, die in zwischen einer sehr planar ausbildbaren Unterschicht und einer Deckschicht angeordnet ist. Auf die Deckschicht ist ein oberes Leiterplattenmaterial aufgebracht.

Ein Spiegelmodul zur optischen Kopplung der Fasern eines an das Spiegelmodul ankoppelbaren Fasersteckverbinders mit den den jeweiligen Fasern zugeordneten Wellenleitern ist auf die Unterschicht aufgebracht.

Auf gegenüberliegenden Bereichen der Stirnfläche des Spiegelmoduls ragt jeweils ein Stift oder eine Bohrung zur Aufnahme jeweils einer Hülse bzw. eines Stifts eines Fasersteckverbinders heraus. Die Stirnfläche dient als Anschlagsfläche für den Fasersteckverbinder.

An der besagten Stirnfläche zwischen den beiden Stiften bzw. den beiden Bohrungen ist eine Ausnehmung zur Aufnahme einer bzw. mehrerer Spiegelebenen mit Spiegeln in das Spiegelmodul eingearbeitet, deren Umlenkflächen in Höhe der Kernschicht angeordnet sind. Der Grundkörper des Spiegelmoduls ist einstückig aus einem Material in Folge eines Herstellverfahrens ausgebildet.

Bevorzugt weist das Spiegelmodul eine H-förmige Grundform auf, wobei die Spiegelebene bzw. die Spiegelebenen entlang der Querverbindung zwischen den beiden Schenkeln des Buchstabens H vorzugsweise im 45° Winkel zur Leiterplattenebene angeordnet ist/sind. Die Spiegelrichtung der beiden Spiegelebenen verlaufen ausgehend von den Fasern des Fasersteckverbinders auf der Leiterplatte, d.h. um 180° versetzt zueinander.

Bevorzugt ist die Unterschicht planer ausgebildet als die Deckschicht.

Auf dem oberen Leiterplattenmaterial ist bevorzugt ein Adapter zur Grobführung und vorzugsweise lösbaren Verriegelung des Fasersteckverbinders angeordnet.

Die Anschlagsfläche liegt unterhalb der Randfläche des oberen Leiterplattenmaterials, so dass noch Raum ist für eine optische Folie zur Verbesserung der Kopplung. Dazu ist bevorzugt eine optische Folie zur Reduzierung der Lichtverluste zwischen der Stirnfläche der Spiegelebenen und den Fasern des Fasersteckverbinders aufgebracht.

Die Spiegel der Spiegelebenen sind zur verbesserten Kopplung der Fasern und Wellenleiter konkav, vorzugsweise parabolisch ausgebildet.

Das Spiegelmodul wird bevorzugt mit Hilfe eines Spritzgussverfahrens einstückig hergestellt und besteht vorzugsweise aus Kunststoff, Metall oder Keramik vorzugsweise mit einem an den Fasersteckverbinder angepassten Wärmeausdehnungskoeffizienten. Auch die Stifte bzw. die Bohrungen des Spiegelmoduls und die Spiegelebenen werden mit Hilfe dieses Spritzgussverfahrens hergestellt.

Die Spiegel des Spiegelmoduls sind poliert und vorzugsweise mit einem lichtreflektierenden Material mit einem hohen Reflektionsfaktor beschichtet, z.B. mit Gold, Aluminium oder Silber.

Die jeweilige Spiegeleinheit lenkt die Lichtstrahlen der Fasern des Fasersteckverbinders um 90° auf die Wellenleiter der Leiterplatte um.

Es werden in der optischen Lage eingebettet Spiegelmodule mit zwei spiegelsymmetrischen angeordneten Spiegeln vorgeschlagen, beispielweise mit 2 Reihen ä 12 Fasern, mit denen eine 90-Grad Strahlumlenkung erzielt werden kann. Das Spiegelmodul ragt an den beiden Außenseiten aus der Leiterplatte heraus und weist dort jeweils einen MT-Stift oder eine Bohrung zur Aufnahme eines MT-Stifts auf, der später zur Feinausrichtung des Fasersteckers dient. Die Oberfläche der Spiegelmodule rund um die MT-Stifte dient als vertikaler Anschlag für das MT-Ferrule (Hülsensystem) des Fasersteckers. Durch Aufsetzen eines MTP/MPO-Adapters auf die Leiterplatte erhält man in Analogie zu der Faser-zu-Faser Steckverbindungstechnik eine steckbare Faser-zu-Wellenleiter Steckverbindung. Der Adapter kann durch visuelles Ausrichten an den MT-Stiften bzw. Bohrungen auf der Leiterplatte platziert werden. Der Hohlraum der Leiterplattenfreistellung kann durch einen (Brechungs-)Index-Angepassten optischen Kleber verfüllt werden.

Im Folgenden sind die Figuren zur Erläuterung der Erfindung dargestellt. Es zeigen:
- Figur 1a:: die Seitenansicht der Leiterplatte im Bereich des Spiegelmoduls,
- Figur 1b:: die Aufsicht der Leiterplatte aus Figur 1a im Bereich des Spiegelmoduls,
- Figur 1c:: eine weitere Seitenansicht der Leiterplatte im Bereich des Spiegelmoduls aus Figur 1b, und
- Figur 2:: die Leiterplatte aus Figur 1 mit dem ihr zugeordneten Fasersteckverbinder.

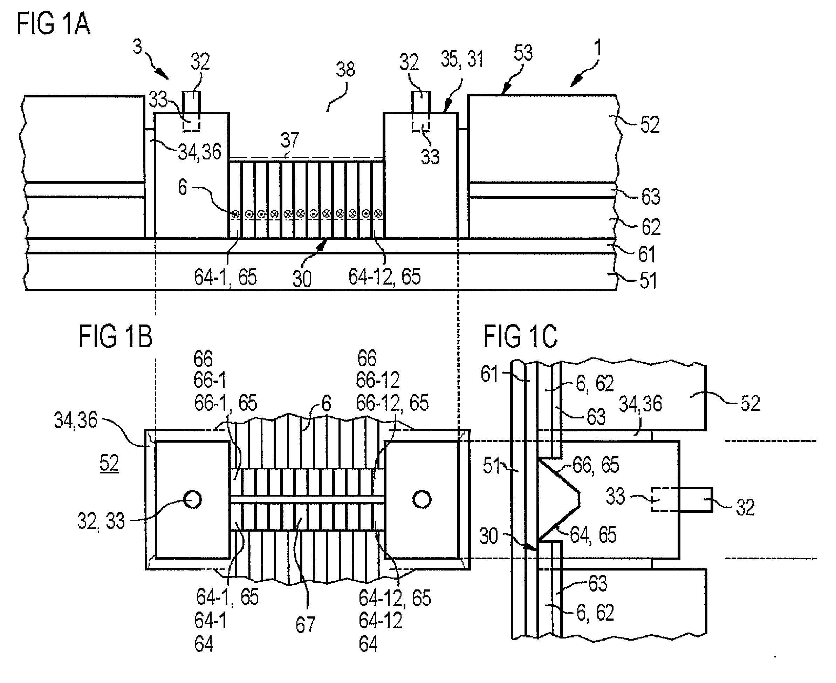

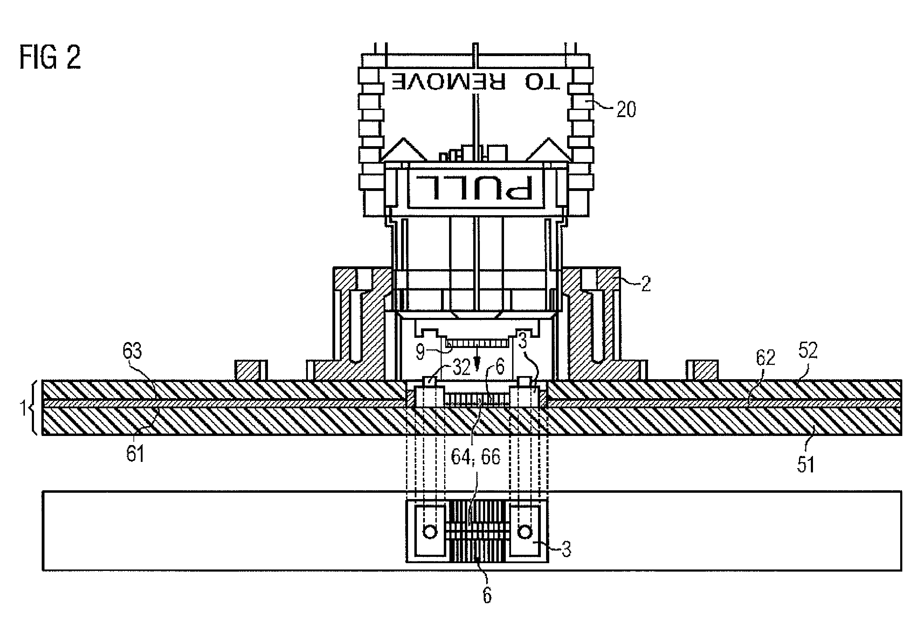

Figur 1 a zeigt eine Leiterplatte 1 für optische und/oder elektronische Bauteile in Seitenansicht. Auf ihr unteres Leiterplattenmaterial 51 oder einer darauf angeordneten Unterschicht 61 sind mehrere optische Wellenleiter 6 angeordnet, die im Wesentlichen parallel zur Ebene des Leiterplattenmaterials 51 verlaufen. Die Wellenleiter 6 weisen jeweils eine Kernschicht 62 auf, die in vertikaler Richtung gesehen zwischen der Unterschicht 61 und einer Deckschicht 63 angeordnet ist. Ein oberes Leiterplattenmaterial 52 ist auf die obere Deckschicht 63 aufgebracht. Ein Modul 3, das im Folgenden als Spiegelmodul 3 bezeichnet wird, dient zur optischen Kopplung der Fasern 9 eines an das Spiegelmodul 3 ankoppelbaren Fasersteckverbinders 20 (in Figur 2 sichtbar) an die den jeweiligen Fasern 9 zugeordneten Wellenleitern 6 der Leiterplatte 1. Das Spiegelmodul 3 ist mit seiner Unterseite 30 auf der Unterschicht 61 oder dem unteren Leiterplattenmaterial 51 angeordnet, wobei bei Aufbringen auf die Unterschicht 61 deren hohe Planarität zu einer guten Ausrichtung des Spiegelmoduls auf der Leiterplatte führt. Das Spiegelmodul 3 ragt mit seiner fasersteckverbinderseitigen, parallel zur Leiterplatte 1 ausgerichteten Stirnfläche 35 aus der Deckschicht 63, bevorzugt zumindest leicht, heraus. Auf gegenüberliegenden Bereichen der Stirnfläche 35 ist jeweils ein Stift 32 oder eine Bohrung 33 zur Aufnahme jeweils einer Hülse bzw. eines Stifts des Fasersteckverbinders 20 angeordnet. Die Bereiche der Stirnfläche 35 um den Bereich der Stifte 32 bzw. der Bohrungen 33 dienen dabei als plane Anschlagsflächen 31 für den Fasersteckverbinder 20, wodurch eine verbesserte optische Kopplung erzielt wird. Das Spiegelmodul 3 weist vorzugsweise eine quaderförmige Grundform auf. Im Bereich der Stirnfläche 35 zwischen den beiden Stiften 32 bzw. den beiden Bohrungen 33 ist eine Ausnehmung 38 zur Aufnahme einer bzw. mehrere Spiegelebenen 64; 66 mit Spiegeln 64-1 bis 64-12; 66-1 bis 66-12 eingebracht, wobei die Umlenkflächen 64-1, 65 bis 64-12, 65; 66-1, 65 bis 66-12, 65 der Spiegel in Höhe der Kernschicht 62 angeordnet sind. Der Grundkörper des Spiegelmoduls 3 mit den beiden Bohrungen 33/Stiften 32 und den Spiegelebenen 64; 66 ist einstückig aus einem Material in Folge eines Herstellverfahrens ausgebildet.

Das Spiegelmodul 3 weist in Aufsicht betrachtet bei Vorhandensein von einer oder zwei Spiegelebenen 64; 66 eine H-förmige Grundform auf, wobei die Spiegelebene 64; 66 bzw. die Spiegelebenen 64; 66 entlang der Querverbindung "-"des Buchstabens H zwischen den beiden Schenkeln I I des Buchstabens H angeordnet ist und vorzugsweise jeweils im 45° Winkel zur Leiterplattenebene 1 angeordnet ist bzw. sind. Dabei verläuft die Spiegelrichtung der beiden Spiegelebenen 64; 66, ausgehend von den Fasern 9 des Fasersteckverbinders 20 auf der Leiterplatte 1 um 180° versetzt zueinander. Der jeweilige Spiegel 64-1 bis 64-12; 66-1 bis 66-12 lenkt die Lichtstrahlen der Fasern 9 des Fasersteckverbinders 20 bevorzugt um 90° auf die Wellenleiter 6 der Leiterplatte 1 um.

Die eine oder mehrere Spiegelebenen 64; 66 dienen zum Koppeln der jeweils mehreren, parallel einreihig zueinander angeordneten Fasern 9 des Fasersteckverbinders 20 mit den entsprechenden Wellenleitern 6 der Leiterplatte 1. Die Stirnfläche 35 des Spiegelmoduls 3 verläuft vorzugsweise unterhalb der Ebene der Oberseite des oberen Leiterplattenmaterials 52. Die Unterschicht 61, auch untere Cladding-Schicht genannt, ist planer ausgebildet als die Deckschicht 63, auch obere Cladding-Schicht genannt.

Der Zwischenraum bzw. Spalt 36 zwischen der senkrecht zur Leiterplattenebene 1 verlaufenden Außenfläche des Spiegelmoduls 3 ist zumindest im Bereich der Schenkel I I des H's und der Leiterplatte 1 mit Material 34 vorzugsweise bis knapp unterhalb der Anschlagfläche 31 ausgefüllt. Das Material 34 ist vorzugsweise gebildet aus dem Material der Deckschicht 63 oder der Unterschicht 61.

Die Stirnfläche 35 des Spiegelmoduls 3 um den Bereich der Bohrungen 33/Stifte 32 dient als Anschlagsfläche 31 für den Fasersteckverbinder 20 und liegt etwas unterhalb der oberen Randfläche 53 des oberen Leiterplattenmaterials 52.

Die Spiegel 64-1 bis 64-12; 66-1 bis 66-12 bzw. Umlenkflächen 64-1, 65 bis 64-12,65; 66-1, 65 bis 66-12, 65 der Spiegelebenen 64; 66 sind konkav, vorzugsweise parabolisch ausgebildet für eine verbesserte Fokussierung und Kopplung der Lichtstrahlen, können aber auch plan ausgebildet sein, wenn beispielsweise eine fokussierende Optik im Fasersteckverbinder 20 angeordnet ist.

Das Spiegelmodul 3 ist mit Hilfe eines Spritzgussverfahrens einstückig hergestellt und ist vorzugsweise aus Kunststoff, Metall oder Keramik mit einem an den Fasersteckverbinder 20 angepassten Wärmeausdehnungskoeffizienten. Die Stifte 32 bzw. die Bohrungen 33 des Spiegelmoduls 3 und die Ausnehmung 38 für die Spiegelebenen 64; 66 wird ebenfalls mit diesem Spritzgussverfahren hergestellt.

Die Spiegel 64-1 bis 64-12; 66-1 bis 66-12 des Spiegelmoduls 3 sind poliert und mit einem lichtreflektierenden Material 67 mit einem hohen Reflektionsfaktor beschichtet, z.B. mit Gold, Aluminium oder Silber.

Zur Reduzierung der Lichtverluste ist eine optische Folie 37 auf das Spiegelmodul 3 zwischen der Stirnfläche den Spiegelebenen 64; 66 und den Fasern 9 des Fasersteckverbinders 20 aufgebracht.

In Figur 2 ist eine Leiterplatte 1 aus Figur 1 in Seitenansicht bzw. Querschnitt dargestellt, wobei ein Adapter 2 und ein Fasersteckverbinder 20 zusätzlich gezeigt ist. Funktionsgleiche Elemente sind mit den gleichen Bezugszeichen aus Figur 1 versehen. Der Adapter 2 dient zur Grobführung und vorzugsweise lösbaren Verriegelung des Fasersteckverbinders 3 auf der Leiterplatte 1 und ist auf dem oberen Leiterplattenmaterial 52 angeordnet bzw. befestigt.

## Patentansprüche

1. Leiterplatte für optische und/oder elektronische Bauteile mit
- einem unteren Leiterplattenmaterial (51),
- mehreren optischen Wellenleitern (6), die auf das Leiterplattenmaterial (51) aufgebracht sind und im Wesentlichen parallel zur Ebene des Leiterplattenmaterials (51) verlaufen, wobei die Wellenleiter (6) jeweils eine Kernschicht (62) aufweisen, die in vertikaler Richtung gesehen zwischen einer Unterschicht (61) und einer Deckschicht (63) angeordnet ist,
- einem oberen Leiterplattenmaterial (52), das auf die obere Deckschicht (63) aufgebracht ist,
- einem Modul (3) zur optischen Kopplung der Fasern (9) eines an das Modul (3) ankoppelbaren Fasersteckverbinders (20) mit den den jeweiligen Fasern (9) zugeordneten Wellenleitern (6) der Leiterplatte (1),
wobei das Modul (3)
o fasersteckverbinderseitig eine parallel zur Leiterplatte (1) ausgerichtete Stirnfläche (35) und
o auf gegenüberliegenden Bereichen seiner Stirnfläche (35) jeweils einen Stift (32) oder eine Bohrung (33) zur Aufnahme jeweils einer Hülse bzw. eines Stifts eines Fasersteckverbinders (20) aufweist, wobei die gegenüberliegenden Bereiche der Stirnfläche (35) um den Bereich der Stifte (32) bzw. der Bohrungen (33) als Anschlagsfläche (31) für den Fasersteckverbinder (20) dienen,
o mit seiner Unterseite (30) auf der Unterschicht (61) oder dem unteren Leiterplattenmaterial (51) angeordnet ist,
o an seiner Stirnfläche (35) zwischen den beiden Stiften (32) bzw. den beiden Bohrungen (33) eine Ausnehmung (38) zur Aufnahme wenigstens einer einzigen Spiegelebene (64; 66) mit Spiegeln (64-1 bis 64-12; 66-1 bis 66-12) aufweist, deren Umlenkflächen (64-1, 65 bis 64-12, 65; 66-1, 65 bis 66-12, 65) in Höhe der Kernschicht (62) angeordnet sind,
∘ einen Grundkörper aufweist, der zusammen mit den Stiften (32) bzw. Bohrungen (33) und der wenigstens einen einzigen Spiegelebene (64; 66) einstückig ausgebildet ist,
**dadurch gekennzeichnet, dass**
- ein Adapter (2) zur Grobführung und vorzugsweise lösbaren Verriegelung des Fasersteckverbinders (20) auf der Leiterplatte (1) auf dem oberen Leiterplattenmaterial (52) angeordnet ist, und
- der Fasersteckverbinder (20) und der Adapter (2) in MTP/MPO-Technik ausgeführt sind.

2. Leiterplatte nach Anspruch 1, **dadurch gekennzeichnet, dass** das Modul (3) in Aufsicht betrachtet bei Vorhandensein von einer oder zwei Spiegelebenen (64; 66) eine H-förmige Grundform aufweist, wobei die Spiegelebene (64; 66) bzw. die Spiegelebenen (64; 66) entlang der Querverbindung (H: "-") zwischen den beiden Schenkeln (H: "I I") der H-Form und vorzugsweise im 45° Winkel zur Leiterplattenebene angeordnet ist/sind, wobei die Spiegelrichtung der beiden Spiegelebenen (64; 66) ausgehend von den Fasern (9) des Fasersteckverbinders (20) auf der Leiterplatte (1), d.h. um 180° versetzt zueinander verlaufen.

3. Leiterplatte nach Anspruch 1 oder 2, **dadurch gekennzeichnet, dass** das Modul (3) ein oder mehrere Spiegelebenen (64; 66) aufweist, die zum Koppeln jeweils mehrerer parallel einreihig zueinander angeordneter Fasern (9) des Fasersteckverbinders (20) mit entsprechenden Wellenleitern (6) dienen.

4. Leiterplatte nach einem der vorherigen Ansprüche, **dadurch gekennzeichnet, dass** die Unterschicht (61) planer ausgebildet ist als die Deckschicht (63)

5. Leiterplatte nach einem der Ansprüche 2 bis 4, **dadurch gekennzeichnet, dass** der Zwischenraum bzw. Spalt (36) zwischen der Außenfläche des Moduls (3) und der Leiterplatte (1) zumindest im Bereich der Schenkel des H's mit Material (34), vorzugsweise gebildet aus dem Material der Deckschicht (63) oder der Unterschicht (61), bis knapp unterhalb der Anschlagfläche (31) aufgefüllt ist.

6. Leiterplatte nach einem der vorherigen Ansprüche, **dadurch gekennzeichnet, dass** die Anschlagsfläche (31) unterhalb der Randfläche (53) des oberen Leiterplattenmaterials (52) liegt.

7. Leiterplatte nach einem der vorherigen Ansprüche, **dadurch gekennzeichnet, dass** die Spiegel (64-1 bis 64-12; 66-1 bis 66-12) der Spiegelebenen (64; 66) konkav, vorzugsweise parabolisch ausgebildet sind.

8. Leiterplatte nach einem der vorherigen Ansprüche, **dadurch gekennzeichnet, dass** die Spiegel (64-1 bis 64-12; 66-1 bis 66-12) der Spiegelebenen (64; 66) plan ausgebildet sind.

9. Leiterplatte nach einem der vorherigen Ansprüche, **dadurch gekennzeichnet, dass** das Modul (3) aus Kunststoff, Metall oder Keramik mit einem an den Fasersteckverbinder (20) angepassten Wärmeausdehnungskoeffizienten besteht.

10. Leiterplatte nach einem der vorherigen Ansprüche, **dadurch gekennzeichnet, dass** die Spiegel (64-1 bis 64-12; 66-1 bis 66-12) des Moduls (3) poliert und vorzugsweise mit einem lichtreflektierenden Material (67) mit einem hohen Reflektionsfaktor beschichtet sind, z.B. mit Gold, Aluminium oder Silber.

11. Leiterplatte nach einem der vorherigen Ansprüche, **dadurch gekennzeichnet, dass** eine optische Folie (37) zur Reduzierung der Lichtverluste zwischen der Stirnfläche der Spiegelebenen (64; 66) und den Fasern (9) des Fasersteckverbinders (20) aufgebracht ist.

12. Leiterplatte nach einem der vorherigen Ansprüche, **dadurch gekennzeichnet, dass** durch die jeweiligen Spiegelebenen (64; 66) die Lichtstrahlen der Fasern (9) des Fasersteckverbinders (20) um 90° auf die Wellenleiter (6) der Leiterplatte (1) umgelenkt sind.

## Claims

1. Printed circuit board for optical and/or electronic devices, comprising
- a lower printed circuit board material (51),
- a plurality of optical waveguides (6), which are provided on the printed circuit board material (51) and extend substantially parallel to the plane of the printed circuit board material (51),
the waveguides (6) respectively having a core layer (62), which, seen in the vertical direction, is arranged between a bottom layer (61) and a top layer (63),
- an upper printed circuit board material (52), which is provided on the upper top layer (63),
- a module (3) for the optical coupling of the fibres (9) of a fibre optic connector (20), which can be coupled to the module (3), with the waveguides (6) of the printed circuit board (1) that are assigned to the respective fibres (9),
the module (3)
o having on the fibre-optic-connector side an end face (35) aligned parallel to the printed circuit board (1) and
o having on opposite regions of its end face (35) respectively a pin (32) or a bore (33) for respectively receiving a bush or a pin of a fibre optic connector (20), the opposite regions of the end face (35) around the region of the pins (32) or the bores (33) serving as a stop surface (31) for the fibre optic connector (20),
o is arranged with its underside (30) on the bottom layer (61) or the lower printed circuit board material (51),
o has on its end face (35), between the two pins (32) or the two bores (33), a recess (38) for receiving at least one single planar array of mirrors (64; 66) with mirrors (64-1 to 64-12; 66-1 to 66-12), the deflecting surfaces (64-1, 65 to 64-12, 65; 66-1, 65 to 66-12, 65) of which are arranged level with the core layer (62),
o has a main body, which is formed integrally with the pins (32) or bores (33) and the at least one single planar array of mirrors (64; 66),
**characterized in that**
- an adapter (2) for the approximate guidance and preferably releasable locking of the fibre optic connector (20) on the printed circuit board (1) is arranged on the upper printed circuit board material (52), and
- the fibre optic connector (20) and the adapter (2) are formed by the MTP/MPO technique.

2. Printed circuit board according to Claim 1, **characterized in that**, considered in plan view, the module (3) has an H-shaped base form if one or two planar arrays of mirrors (64; 66) are present, the planar array of mirrors (64; 66) or the planar arrays of mirrors (64; 66) being arranged along the cross-connection (H: "-") between the two legs (H: "I I") of the H shape and preferably being arranged at an angle of 45° to the plane of the printed circuit board, the directions of the mirrors of the two planar arrays of mirrors (64; 66) from the fibres (9) of the fibre optic connector (20) extending towards one another on the printed circuit board (1), i.e. offset by 180°.

3. Printed circuit board according to Claim 1 or 2, **characterized in that** the module (3) has one or more planar arrays of mirrors (64; 66), which serve for coupling in each case a plurality of fibres (9) arranged in a single row parallel to one another of the fibre optic connector (20) with corresponding waveguides (6).

4. Printed circuit board according to one of the preceding claims, **characterized in that** the bottom layer (61) is formed as more planar than the top layer (63).

5. Printed circuit board according to one of Claims 2 to 4, **characterized in that** the intermediate space or gap (36) between the outer surface of the module (3) and the printed circuit board (1), at least in the region of the legs of the H, is filled with material (34), preferably formed from the material of the top layer (63) or the bottom layer (61), to just below the stop surface (31).

6. Printed circuit board according to one of the preceding claims, **characterized in that** the stop surface (31) lies below the peripheral surface (53) of the upper printed circuit board material (52).

7. Printed circuit board according to one of the preceding claims, **characterized in that** the mirrors (64-1 to 64-12; 66-1 to 66-12) of the planar arrays of mirrors (64; 66) are formed as concave, preferably parabolic.

8. Printed circuit board according to one of the preceding claims, **characterized in that** the mirrors (64-1 to 64-12; 66-1 to 66-12) of the planar arrays of mirrors (64; 66) are formed as planar.

9. Printed circuit board according to one of the preceding claims, **characterized in that** the module (3) consists of plastic, metal or ceramic with a coefficient of thermal expansion that is adapted to the fibre optic connector (20).

10. Printed circuit board according to one of the preceding claims, **characterized in that** the mirrors (64-1 to 64-12; 66-1 to 66-12) of the module (3) are polished and preferably coated with a light-reflective material (67) of a high reflection factor, for example with gold, aluminium or silver.

11. Printed circuit board according to one of the preceding claims, **characterized in that** an optical film (37) for reducing the light losses has been applied between the end face of the planar arrays of mirrors (64; 66) and the fibres (9) of the fibre optic connector (20).

12. Printed circuit board according to one of the preceding claims, **characterized in that** the light rays of the fibres (9) of the fibre optic connector (20) are deflected by the respective planar arrays of mirrors (64; 66) by 90° onto the waveguides (6) of the printed circuit board (1).

## Revendications

1. Circuit imprimé pour composants optiques et/ou électroniques, comprenant
- un matériau de circuit imprimé inférieur (51),
- plusieurs guides d'onde optique (6) qui sont appliqués sur le matériau de circuit imprimé (51) et sont essentiellement parallèles au plan du matériau de circuit imprimé (51), dans lequel les guides d'onde (6) présentent respectivement une couche centrale (62) qui est agencée, considérée dans le sens, vertical entre une sous-couche (61) et une couche superficielle (63),
- un matériau de circuit imprimé supérieur (52) qui est appliqué sur la couche superficielle supérieure (63),
- un module (3) destiné au couplage optique des fibres (9) d'un connecteur de fibres (20), qui peut être couplé au module (3), avec les guides d'onde (6), associés aux fibres (9) respectives, du circuit imprimé (1),
dans lequel le module (3)
o présente, côté connecteur de fibres, une surface avant (35) orientée parallèle au circuit imprimé (1) et
o présente, sur des secteurs se faisant face de sa surface avant (35), respectivement un tenon (32) ou un alésage (33) destiné à recevoir respectivement un manchon ou un tenon d'un connecteur de fibres (20), dans lequel les secteurs se faisant face de la surface avant (35), qui se situent autour du secteur des tenons (32) resp. des alésages (33), servent de surface de butée (31) pour le connecteur de fibres (20),
∘ est agencé avec son côté inférieur (30) sur la sous-couche (61) ou sur le matériau de circuit imprimé inférieur (51),
∘ présente, au niveau de sa surface avant (35) entre les deux tenons (32) resp. les deux alésages (33), un évidement (38) destiné à recevoir au moins un plan de miroir unique (64 ; 66) avec des miroirs (64-1 à 64-12 ; 66-1 à 66-12) dont les surfaces déflectrices (64-1, 65 à 64-12, 65 ; 66-1, 65 à 66-12, 65) sont agencées à hauteur de la couche centrale (62),
∘ présente un corps de base qui est réalisé monobloc avec les tenons (32) resp. les alésages (33) et le au moins un plan miroir unique (64 ; 66),
**caractérisé en ce que**,
- un adaptateur (2) destiné à un guidage grossier et de manière préférée un verrouillage amovible du connecteur de fibres (20) sur le circuit imprimé (1) est agencé sur le matériau de circuit imprimé supérieur (52), et
- le connecteur de fibres (20) et l'adaptateur (2) sont réalisés selon un procédé MTP/MPO.

2. Circuit imprimé selon la revendication 1, **caractérisé en ce que** le module (3), considéré de face, présente, en présence d'un ou de deux plan (s) de miroir (64 ; 66), une forme de base en forme de H, dans lequel le plan de miroir (64 ; 66) resp. les plans de miroir (64 ; 66) est/sont agencé (s) le long de la connexion transversale (H : "-") entre les deux branches (H : "I I") de la forme en H et de manière préférée avec un angle de 45° par rapport au plan de circuit imprimé, dans lequel les sens de réflexion des deux plans de miroir (64 ; 66) à partir des fibres (9) du connecteur de fibres (20) sont décalés l'un par rapport à l'autre sur le circuit imprimé (1), à savoir de 180°.

3. Circuit imprimé selon la revendication 1 ou 2, **caractérisé en ce que** le module (3) présente un ou plusieurs plan(s) de miroir (64 ; 66) qui servent au couplage de respectivement plusieurs fibres (9), agencées parallèles les unes aux autres en une seule rangée, du connecteur de fibres (20) avec des guides d'onde (6) correspondants.

4. Circuit imprimé selon l'une quelconque des revendications précédentes, **caractérisé en ce que** la sous-couche (61) est réalisée plus plane que la couche superficielle (63).

5. Circuit imprimé selon l'une quelconque des revendications 2 à 4, **caractérisé en ce que** l'espace intermédiaire resp. l'écart (36) entre la surface extérieure du module (3) et le circuit imprimé (1) est rempli au moins dans le secteur des branches du H avec un matériau (34), de manière préférée formé du matériau de la couche superficielle (63) ou de la sous-couche (61) presque jusqu'au-dessous de la surface de butée (31).

6. Circuit imprimé selon l'une quelconque des revendications précédentes, **caractérisé en ce que** la surface de butée (31) se trouve en dessous de la surface de bord (53) du matériau de circuit imprimé supérieur (52).

7. Circuit imprimé selon l'une quelconque des revendications précédentes, **caractérisé en ce que** les miroirs (64-1 à 64-12 ; 66-1 à 66-12) des plans de miroir (64 ; 66) sont réalisés concaves, de manière préférée paraboliques.

8. Circuit imprimé selon l'une quelconque des revendications précédentes, **caractérisé en ce que** les miroirs (64-1 à 64-12 ; 66-1 à 66-12) des plans de miroir (64 ; 66) sont réalisés plans.

9. Circuit imprimé selon l'une quelconque des revendications précédentes, **caractérisé en ce que** le module (3) est constitué de matière plastique, de métal ou de céramique avec un coefficient de dilatation thermique adapté au connecteur de fibres (20).

10. Circuit imprimé selon l'une quelconque des revendications précédentes, **caractérisé en ce que** les miroirs (64-1 à 64-12 ; 66-1 à 66-12) du module (3) sont polis et de manière préférée revêtus d'un matériau réfléchissant la lumière (67) avec un facteur de réflexion élevé, par exemple de l'or, de l'aluminium ou de l'argent.

11. Circuit imprimé selon l'une quelconque des revendications précédentes, **caractérisé en ce qu'**un film optique (37) est appliqué afin de réduire les pertes lumineuses entre la surface avant des plans de miroir (64 ; 66) et les fibres (9) du connecteur de fibres (20).

12. Circuit imprimé selon l'une quelconque des revendications précédentes, **caractérisé en ce que** les rayons lumineux des fibres (9) du connecteur de fibres (20) sont déviés de 90° sur les guides d'onde (6) du circuit imprimé (1) grâce aux plans de miroir (64 ; 66) respectifs.
